# EUROPÄISCHE PATENTSCHRIFT

(11) **EP 1 680 296 B1**
(45) Veröffentlichungstag und Bekanntmachung des Hinweises auf die Patenterteilung: **09.01.2008**
(21) Anmeldenummer: 04790021.2
(22) Anmeldetag: 21.10.2004
(51) Int. Cl.: B60J 7/00, B60J 7/12

(54) **CABRIOLET-FAHRZEUG**
CABRIOLET VEHICLE
VEHICULE DU TYPE CABRIOLET

(30) Priorität: 24.10.2003 DE 10349819
(43) Veröffentlichungstag der Anmeldung: 19.07.2006
(73) Patentinhaber: Wilhelm Karmann GmbH, 49084 Osnabrück (DE)
(72) Erfinder: LIEDMEYER, Petra, 49509 Recke (DE); HOLLENBECK, Sven, 49492 Westerkappeln (DE)
(86) Internationale Anmeldenummer: PCT/DE2004/002344
(87) Internationale Veröffentlichungsnummer: WO 2005/039907

(56) Entgegenhaltungen:
- DE-A1- 10 029 478
- DE-C1- 19 616 255
- US-A1- 2001 030 443

## Beschreibung

Die Erfindung betrifft ein Cabriolet-Fahrzeug nach dem Oberbegriff des Anspruchs 1 sowie ein bewegliches Fahrzeugdach nach dem Oberbegriff des Anspruchs 9.

Es sind zahlreiche Cabriolet-Fahrzeuge bekannt, die einen an einem metallischen Dachgestell gehaltenen Dachbezug aufweisen, der in seinem hinteren Bereich von einem Spannbügel untergriffen ist. Ein solches Fahrzeug wind z.B. in US 2001/0030443 offenbart. Ein weiteres Vertreter dieser Gattung ist das aktuelle Audi-Cabriolet, basierend auf dem Audi A4. Dort liegt der Spannbügel bei geschlossenem Dach auf einem Teil der Karosserie - hier einem beweglichen Deckelteil - auf und spannt dabei den Dachbezug, der im vorderen Bereich an einer starren Dachspitze gehalten sein kann. Ein derartiges Dach muß bei seiner Montage im Rohbau ausgerichtet werden. Hierfür sind im Rohbau etwa im Bereich des hinteren Radhauses einstellbare Abstützungen vorgesehen, auf denen der Spannbügel in Offenstellung des Daches aufliegt. Die Einstellung der Abstützungen ist sehr genau vorzunehmen, damit der Spannbügel nicht bei seiner Ablage über Teile des Verdeckkastens scheuert und dabei diesen beschädigt und/oder selbst beschädigt wird und damit eine für den Bezug optimierte Faltung erreicht wird. Eine zu hohe Endlage des Spannbügels würde bei montiertem Dach in dessen Offenstellung eine zu enge Faltung des Dachbezugs bewirken, so daß Knicke im Bezug entstehen würden. Andererseits könnte eine zu niedrige Einstellung der Abstützungen die vorgenannte Kollision des Spannbügels mit Teilen der Karosserie bewirken. Auch müssen beide an beiden Karosserieseiten Abstützungen eingestellt werden, um einen eventuellen Höhenversatz zwischen den Fahrzeugseiten durch Fertigungstoleranzen ausgleichen zu können.

Eine Voreinstellung der Abstützungen im Rohbau ist zwar vor Montage des Daches so weit möglich, daß diese Toleranzen der Rohbaufertigung ausgleicht. Da jedoch auch das zu montierende Dach Toleranzen aufweist und die korrekte Faltung dennoch sichergestellt werden muß, ist eine Feineinstellung der Abstützungen erst bei montiertem Dach möglich. Dieses ist aufgrund der Platzverhältnisse in der Karosserie mühselig und zudem zeitaufwendig.

Der Erfindung liegt das Problem zugrunde, bei einem Cabriolet-Fahrzeug mit einem hinteren Spannbügel eine Optimierung der Dachmontage zu erreichen.

Die Erfindung löst dieses Problem durch ein Cabriolet-Fahrzeug mit den Merkmalen des Anspruchs 1 sowie durch ein bewegliches Dach mit den Merkmalen des Anspruchs 9. Hinsichtlich weiterer vorteilhafter Ausgestaltungen der Erfindung wird auf die abhängigen Ansprüche 2 bis 8 verwiesen.

Mit der Erfindung ist ein Ausgleich der Toleranzen aus der Dachfertigung bereits vor dessen Montage im Rohbau der Karosserie möglich. Dabei sind die Abstützungen besser zugänglich als in der Karosserie nach Aufsetzen des Daches. Zudem kann das Know-How des Dachherstellers für die Feineinstellung genutzt werden und das Dach dann im justierten Zustand der Abstützungen als Fertigmodul zur Rohbaumontage angeliefert werden.

Dabei genügt für die Dachmontage die Befestigung des Dachmoduls im Bereich seitlicher Hauptlager. Eine Ausrichtung an irgendwelchen weiteren Karosserieteilen, etwa im Boden des Verdeckkastens, ist komplett entbehrlich. Zusätzliche Abstützungen an der Karosserie sind auch nicht mehr notwendig. Die Montage ist somit erheblich beschleunigt und vereinfacht und die Exaktheit der Dachfaltung auch bei großen Fertigungstoleranzen in der Rohbaukarosserie verbessert.

Weitere Vorteile der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: einen mittleren Bereich eines erfindungsgemäßen Cabriolet-Fahrzeugs in schematischer, teilweise abgebrochener perspektivischer Ansicht bei vollständig geschlossenem Dach,
- Fig. 2: eine ähnliche Ansicht wie Fig. 1 bei beginnender Dachöffnung, der Übersicht halber ohne Dachbezug gezeichnet,

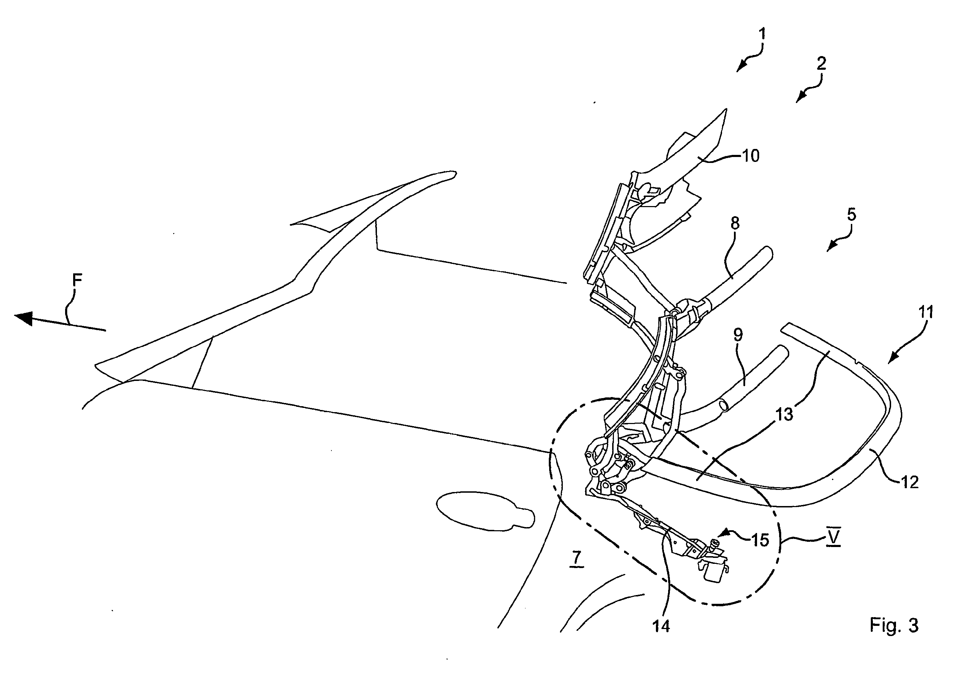

- Fig. 3: eine ähnliche Ansicht wie Fig. 2 bei weiter fortschreitender Dachöffnung und unter seine Erstreckungsebene bei geschlossenem Dach absinkendem Spannbügel,
- Fig. 4: eine ähnliche Ansicht wie Fig. 3 bei vollständiger Offenstellung des Daches und auf seitlichen Abstützungen aufliegendem Spannbügel,

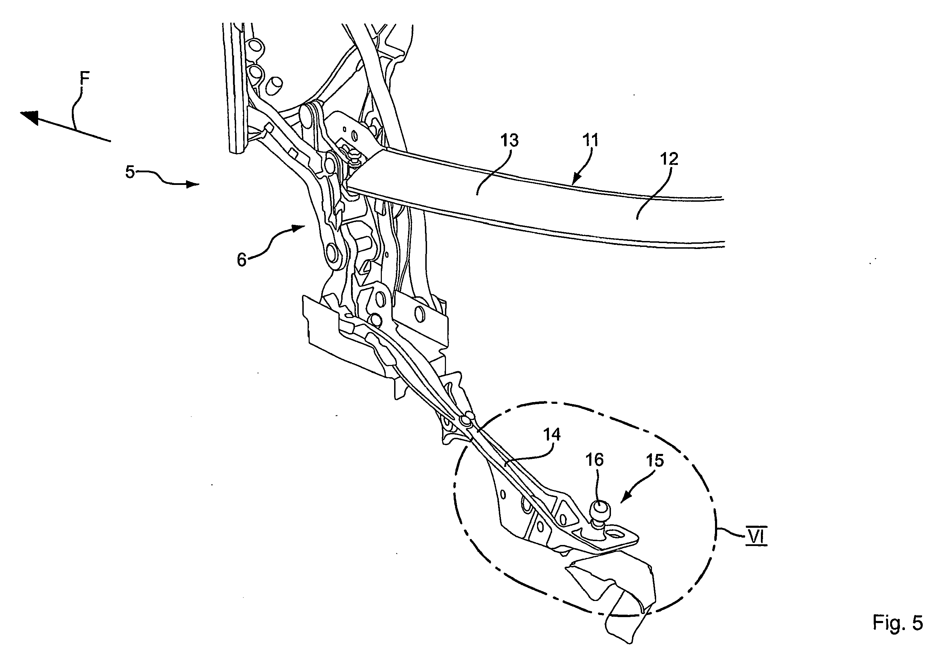

- Fig. 5: eine Detailansicht etwa des Ausschnitts V in Fig. 3, wiederum ohne eingezeichneten Dachbezug,
- Fig. 6: das Detail VI in Fig. 5 aus leicht gedrehter Perspektive,
- Fig. 7: eine Detailansicht etwa entsprechend dem Ausschnitt VII in Fig. 4 aus leicht gedrehter Perspektive.

Das erfindungsgemäße Cabriolet-Fahrzeug 1 kann sowohl ein Zweisitzer als auch ein Cabriolet-Fahrzeug mit einem größeren Innenraum und etwa zwei Sitzreihen hintereinander sein.

Es umfaßt ein bewegliches Dach 2, das zumindest in seinem hinteren Bereich einen flexiblen Dachbezug 3 aufweist. Im gezeichneten Ausführungsbeispiel erstreckt sich der Bezug 3 über das gesamte bewegliche Dach 2.

Der Bezug 3 kann auch eine flexible und daher selbst faltbare Heckscheibe 4 umfassen. Die Heckscheibe 4 kann auch starr ausgebildet sein und beispielsweise aus Kunststoff oder Glas bestehen.

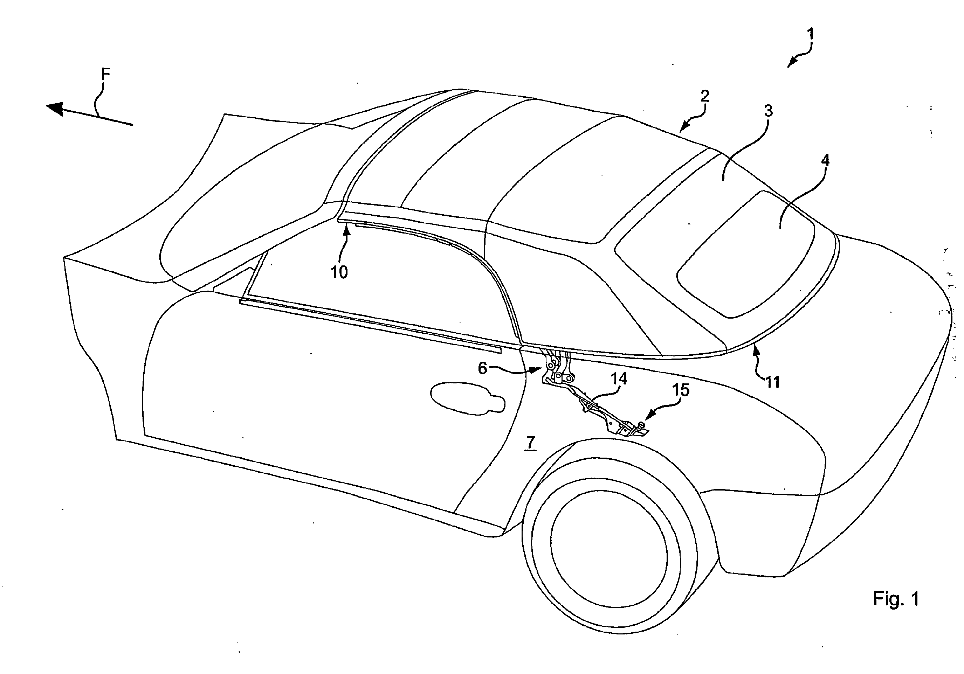

Der Dachbezug 3 ist von einem insgesamt mit 5 bezeichneten Dachgestänge untergriffen. Dieses ist über zwei seitliche Hauptlager 6 am Rohbau der Karosserie 7 zu befestigen. Das Dach 2 nimmt dann in geschlossener Stellung die in Figur 1 gezeichnete Lage ein. Die Gelenkachsen der Hauptlager 6 liegen horizontal und quer zum Fahrzeug 1, so daß das Dach 2 nach hinten wegschwenkbar ist. Anstelle eines reinen Schwenkens kommen auch verschiedenste Überlagerungen von translatorischen und rotatorischen Bewegungen in Betracht.

Das Dachgestänge 5 umfaßt hier mehrere den Bezug 3 untergreifende und quer zum Dach 2 verlaufende Spriegel 8, 9, eine in sich starre Dachspitze 10, die parallel zu den Spriegeln 8, 9 verläuft, und einen in Draufsicht im wesentlichen U-förmigen hinteren Spannbügel 11, der einen quer erstreckten Mittelschenkel 12 und seitliche, in montierter Stellung im wesentlichen längs zum Fahrzeug 1 verlaufende Schenkel 13 umfaßt. Anstelle des einen durchgehenden hinteren Spannbügels 11 sind auch einzelne seitliche Spannbügel möglich, die sich zum Beispiel als spitzwinklig zulaufende Finnen heckwärts erstrecken können.

Des weiteren erstrecken sich von den Hauptlagern 6 des Dachgestänges 5 in den gleichen vertikalen Ebenen, in denen auch die Seitenschenkel 13 des Spannbügels 11 liegen, nach hinten unten weisende Ausleger 14, die fest mit den starren Teilen des Dachgestänges 5 verbunden sind. Diese können zur Gewichtsersparnis aus einem Leichmetallwerkstoff gebildet sein, etwa auch aus einem metallischen Schaumwerkstoff.

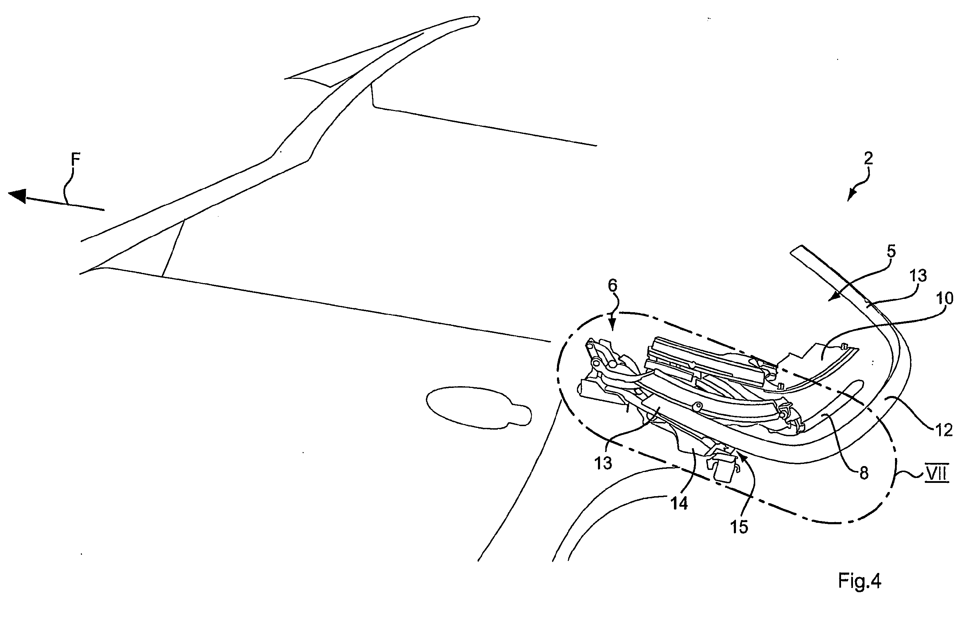

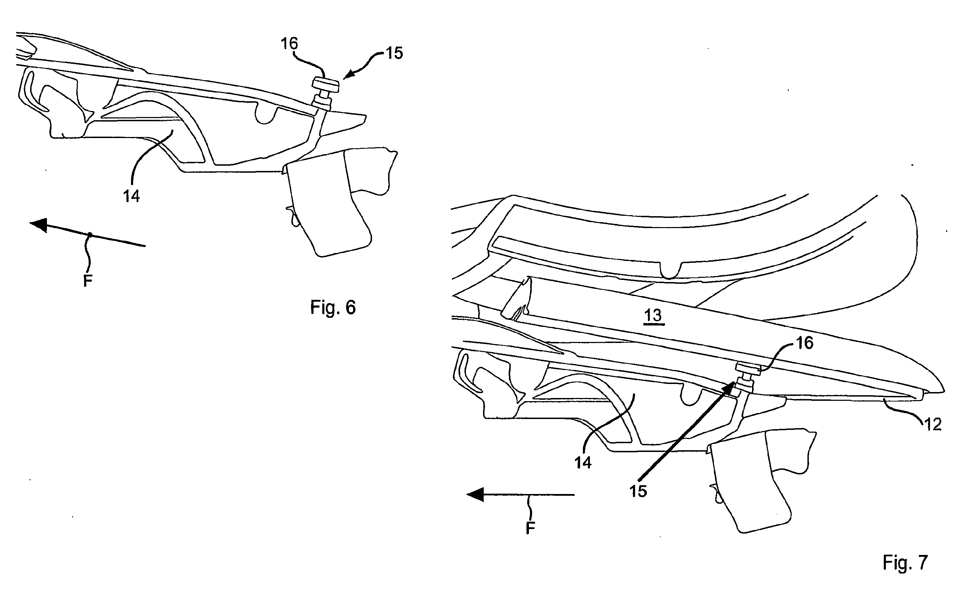

Im ihren der Fahrtrichtung F entgegengesetzten freien Endbereichen sind die Ausleger 14 jeweils mit einer Abstützung 15 versehen, auf der der Spannbügel 11 bei geöffnetem Dach 2 aufliegt (Fig. 4, Fig. 7). Diese Auflage läßt sich, da die Ausleger 14 Teil des Dachgestänges 5 sind, unabhängig von der Karosserie 7 erreichen, etwa vor Montage des Daches 2 auf dieser.

Die Abstützungen 15 umfassen oberseitig jeweils einen elastisch deformierbaren Pufferteil 16, der federnd gegenüber dem Ausleger 14 gelagert sein kann und der zumindest höheneinstellbar ist. Auch eine Längs- oder Querverstellung der Abstützungen 15 kann ebenso wie eine Neigungsverstellung möglich sein.

Damit kann das Dach 2 vor Montage im Karosserierohbau etwa auf einem Bock an seinen Hauptlagern 6 vormontiert werden, so daß es dort geöffnet werden kann, wobei sich der Spannbügel 11 nach unten absenkt. Dabei können die Abstützungen 15 eingestellt werden. Es muß im Unterschied zum Stand der Technik nicht von oben in einem Rohbau gearbeitet werden, sondern die Abstützungen 15 liegen jetzt frei im Sichtfeld der Monteure. Die Feinjustage der Abstützungen 15 zum Ausgleich von Fertigungstoleranzen im Dach 2 ist damit einfach und schnell möglich. Die Faltung des Bezugs 3 kann so unproblematisch mit den gewünschten hinreichend großen Biegeradien eingestellt werden.

Die so fertig eingestellt modulare Einheit kann dann an den Rohbau angeliefert und lediglich über die gegenüberliegenden Hauptlager 6 mit diesem verbunden werden, ohne daß hier noch weitere Arbeiten zur Dachjustage erforderlich wären. Die Ablagestellung ist über die Voreinstellung der Abstützungspuffer 15 in jedem Fall richtig eingestellt, unabhängig davon, ob beispielsweise im Rohbau der Boden des Verdeckkastens zur Rückwand korrekt oder etwas zu hoch oder zu niedrig montiert wurde. Die Ausleger 14 hängen hinterher frei in der Karosserie 7 und haben außerhalb der Hauptlager 6 keine Verbindung zu dieser. Daher ist auch für diese keine weitere Justagearbeit erforderlich.

Unabhängig von der Möglichkeit der Verstellung der Abstützungen 15 am Dachmodul 2 vor seiner Montage können die Abstützungen 15 auch nach Einbau in der Karosserie 7 eingestellt werden, wodurch etwa auch nach einem Austausch eines beschädigten Dachbezugs 3 wiederum eine exakt ausgerichtete Auflage des Spannbügels 11 möglich ist.

Anstelle der hier gezeigten beiden separaten seitlichen Ausleger 14 ist je nach Platzverhältnissen auch ein einziger, eventuell U-förmiger Ausleger möglich, der den Spannbügel 11 untergreift und ihn in Offenstellung des Daches 2 abstützt.

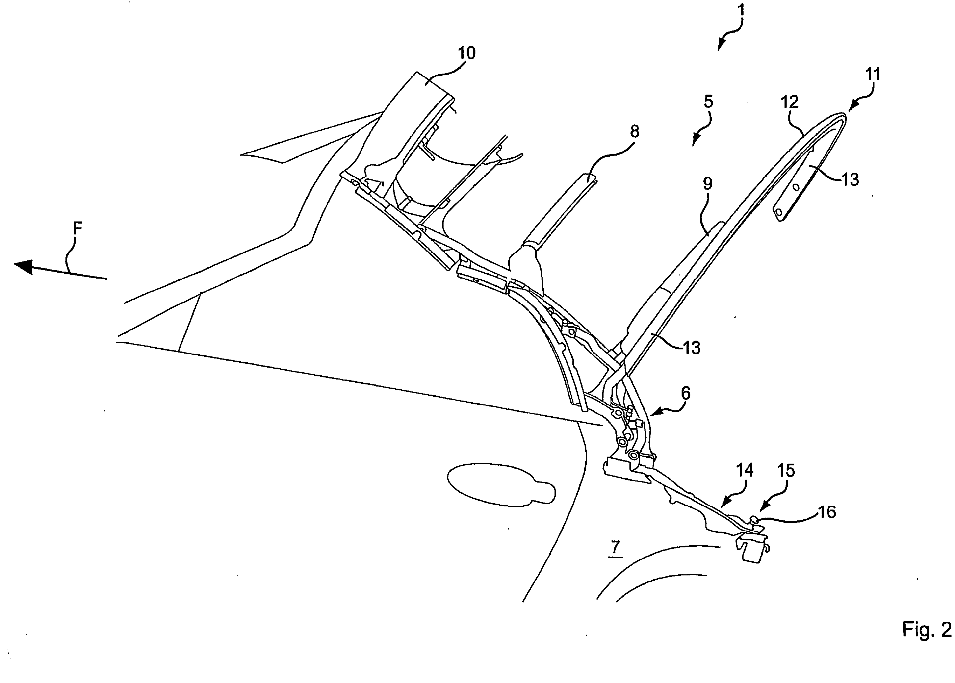

In montierter Stellung ist der Bezug 3 des geschlossenen Daches 2 über die Dachspitze 10, Spriegel 8, 9 und den hinteren Spannbügel 11 gespannt. Zur Dachöffnung hebt der Spannbügel von seiner Auflagestellung auf einem Teil der Karosserie, etwa einem Verdeckkastendeckel, ab (Fig. 2), die Dachspitze 10 wird vom Windschutzscheibenrahmen gelöst. Während der weiteren Öffnung senkt sich dann der Spannbügel 11 mit seinem entgegen der Fahrtrichtung F liegenden hinteren Bereich in die Karosserie 7 ab und trifft am Ende seiner Öffnungsbewegung von oben auf die Abstützungen 15 auf. Dort wird der Spannbügel dann ohne Relativbewegung und ohne Kollisionsgefahr mit weiteren Teilen gehalten. Der Verschleiß des Spannbügels 11, insbesondere des Dachbezugs 3 und auch eventueller Karosserieteile, die mit Teilen des Dachs 2 kollidieren könnten, ist daher erfindungsgemäß vermindert.

Die Erfindung ist sowohl bei Fahrzeugen mit manuell zu bewegenden Dächern als auch bei voll- oder teilautomatischer Beweglichkeit des Daches 2 anwendbar.

## Patentansprüche

1. Cabriolet-Fahrzeug (1) mit einem zumindest im hinteren Bereich einen flexiblen Bezug (3) aufweisenden Dach (2), wobei der Bezug (3) im geschlossenen Zustand über zumindest einen Spannbügel (11) gegenüber der Karosserie (7) unter Spannung halterbar ist und der Spannbügel (11) in Offenstellung auf einer oder mehreren Abstützung(en) (15) aufliegt,
**dadurch gekennzeichnet,**
**daß** die Abstützung(en) (15) an einem oder mehreren Ausleger(n) (14) gehalten ist oder sind, der oder die mit einem den Bezug (3) untergreifenden Dachgestell (5) vor dessen Montage auf der Karosserie (7) verbunden ist.

2. Cabriolet-Fahrzeug (1) nach Anspruch 1
**dadurch gekennzeichnet,**
**daß** der Spannbügel (11) in Draufsicht im wesentlichen U-förmig ausgebildet und pro Fahrzeugseite ein sich heckwärts erstreckender Ausleger (14) mit jeweils zumindest einer unterseitig unterstützenden Abstützung (15) vorgesehen ist.

3. Cabriolet-Fahrzeug (1) nach einem der Ansprüche 1 oder 2,
**dadurch gekennzeichnet,**
**daß** die Ausleger (14) aus einem Leichtmetallwerkstoff gebildet sind.

4. Cabriolet-Fahrzeug (1) nach einem der Ansprüche 1 bis 3,
**dadurch gekennzeichnet,**
**daß** die Höhenerstreckung der Abstützung(en) (15) auf dem oder den Ausleger (n) (14) jeweils einstellbar ist.

5. Cabriolet-Fahrzeug (1) nach Anspruch 4,
**dadurch gekennzeichnet,**
**daß** die Höheneinstellung vor Montage des Daches (2) an der Karosserie (7) vornehmbar ist.

6. Cabriolet-Fahrzeug (1) nach einem der Ansprüche 4 oder 5,
**dadurch gekennzeichnet,**
**daß** in montierter Stellung des Daches (2) eine Höheneinstellung vornehmbar ist.

7. Cabriolet-Fahrzeug (1) nach einem der Ansprüche 1 bis 6,
**dadurch gekennzeichnet,**
**daß** die Abstützung(en) (15) von dem Spannbügel (11) nach Art eines Puffers eindrückbar ist oder sind.

8. Cabriolet-Fahrzeug (1) nach einem der Ansprüche 1 bis 7,
**dadurch gekennzeichnet,**
**daß** die Abstützung(en) (15) federnd auf dem jeweiligen Ausleger (14) gelagert ist oder sind.

9. Bewegliches Fahrzeugdach (2) mit zumindest im hinteren Bereich einem flexiblen Bezug (3), der im geschlossenen Zustand über zumindest einen Spannbügel (11) unter Spannung halterbar ist, der zur Einstellung eines offenen Dachzustands zumindest bereichsweise unter seine bei geschlossenem Dach eingenommene Erstreckungsebene nach unten verlagerbar ist,
**dadurch gekennzeichnet,**
**daß** einem den Bezug (3) untergreifenden Dachgestell (5) zumindest ein heckwärts wiesender Ausleger (14) zugeordnet ist, an dem ein oder mehrere Abstützung(en) (15) für die Auflage des Spannbügels (11) in abgelegter Stellung unabhängig von einer das Dach (2) nach seiner Montage tragenden Fahrzeugkarosserie (7) angeordnet ist oder sind.

## Claims

1. A cabriolet vehicle (1) with a roof (2) which has a flexible covering (3) at least in the rear area, wherein, in the closed state, the covering (3) is, whilst stretched, able to be fastened to the car body (7) via at least one clamp clip (11) and the clamp clip (11), in the open position, bears on one or more support(s) (15),
**characterised in that**
the support(s) (15) is or are held at one or more extension arm(s) (14) which is or are connected to a roof frame (5), which grips the covering (3) from below, before it is mounted on the car body (7).

2. The cabriolet vehicle (1) according to Claim 1
**characterised in that**
the clamp clip (11) is configured substantially in a U-shape seen from above and a rearwardly extending extension arm (14) is, on each vehicle side, respectively provided with at least one support (15) which provides support from below.

3. The cabriolet vehicle (1) according to one of Claims 1 or 2,
**characterised in that**
the extension arms (14) are formed from a light metal material.

4. The cabriolet vehicle (1) according to one of Claims 1 to 3,
**characterised in that**
the height extension of the support(s) (15) is, in each case, adjustable on the extension arm(s) (14).

5. The cabriolet vehicle (1) according to Claim 4,
**characterised in that**
the height adjustment is able to be carried out prior to the mounting of the roof (2) at the car body (7).

6. The cabriolet vehicle (1) according to one of Claims 4 or 5,
**characterised in that**
a height adjustment is able to be carried out in the mounted position of the roof (2).

7. The cabriolet vehicle (1) according to one of Claims 1 to 6,
**characterised in that**
the support(s) (15) is or are able to be pushed in by the clamp clip (11) in the manner of a buffer.

8. The cabriolet vehicle (1) according to one of Claims 1 to 7,
**characterised in that**
the support(s) (15) is or are borne in an elastic manner on the respective extension arm (14).

9. A movable vehicle roof (2) with a flexible covering (3) at least in the rear area, said covering, in the closed state, whilst stretched, being able to be fastened via at least one clamp clip (11) which is able to be displaced downwards in order to adjust an open roof state at least in areas, below its extension plane taken in in the case of a closed roof
**characterised in that**
there is associated with a roof frame (5), which grips the covering (3) from below, at least one rearwardly pointing extension arm (14) at which one or more support(s) (15) is or are arranged for the clamp clip (11) to bear on in the stored position independently of a vehicle body (7) upon which the roof (2) bears after it is mounted.

## Revendications

1. Véhicule de type cabriolet (1), comprenant un toit (2) présentant au moins dans la région arrière un revêtement flexible (3), le revêtement (3) pouvant être fixé de manière tendue dans l'état fermé par le biais d'au moins un arceau de tensionnement (11) par rapport à la carrosserie (7) et l'arceau de tensionnement (11) reposant dans la position ouverte sur un ou plusieurs appuis (15), **caractérisé en ce que** le ou les appuis (15) est ou sont fixés sur un ou plusieurs bras de potence (14) qui sont connectés à un bâti de toit (5) venant en prise par le dessous avec le revêtement (3) avant son montage sur la carrosserie (7).

2. Véhicule de type cabriolet (1) selon la revendication 1, **caractérisé en ce que** l'arceau de tensionnement (11) est réalisé en vue de dessus essentiellement en forme de U et **en ce qu'**un bras de potence (14) s'étendant vers l'arrière de chaque côté du véhicule est muni d'au moins un appui respectif (15) le supportant par le dessous.

3. Véhicule de type cabriolet (1) selon l'une quelconque des revendications 1 ou 2, **caractérisé en ce que** les bras de potence (14) sont formés d'un matériau à base de métal léger.

4. Véhicule de type cabriolet (1) selon l'une quelconque des revendications 1 à 3, **caractérisé en ce que** l'étendue en hauteur du ou des appuis (15) sur le ou les bras de potence (14) peut être ajustée individuellement.

5. Véhicule de type cabriolet (1) selon la revendication 4, **caractérisé en ce que** l'ajustement en hauteur peut être effectué avant le montage du toit (2) sur la carrosserie (7).

6. Véhicule de type cabriolet (1) selon l'une quelconque des revendications 4 ou 5, **caractérisé en ce que** l'on peut effectuer un ajustement en hauteur dans la position montée du toit (2).

7. Véhicule de type cabriolet (1) selon l'une quelconque des revendications 1 à 6, **caractérisé en ce que** le ou les appuis (15) peut ou peuvent être enfoncés par l'arceau de tensionnement (11) à la manière d'un tampon.

8. Véhicule de type cabriolet (1) selon l'une quelconque des revendications 1 à 7, **caractérisé en ce que** le ou les appuis (15) est ou sont montés élastiquement sur le bras de potence respectif (14).

9. Toit de véhicule mobile (2) comprenant au moins, dans la région arrière, un revêtement flexible (3), qui peut être fixé de manière tendue dans l'état fermé par le biais d'au moins un arceau de tensionnement (11), qui peut être décalé vers le bas pour l'ajustement d'un état ouvert du toit au moins en partie sous son plan d'étendue adopté lorsque le toit est fermé, **caractérisé en ce que** l'on associe à un bâti de toit (5) venant en prise par le dessous avec le revêtement (3), au moins un bras de potence (4) tourné vers l'arrière, sur lequel est ou sont disposés un ou plusieurs appuis (15) pour l'appui de l'arceau de tensionnement (11) dans la position déposée, indépendamment d'une carrosserie de véhicule (7) portant le toit (2) après son montage.
